# FASCICULE DE BREVET EUROPEEN

(11) **EP 2 179 119 B1**
(45) Date de publication et mention de la délivrance du brevet: **27.06.2012**
(21) Numéro de dépôt: 08787142.2
(22) Date de dépôt: 12.08.2008
(51) Int. Cl.: E05C 3/30, E05C 19/14, B64C 7/02, B64D 29/08

(54) **DISPOSITIF DE VERROUILLAGE COMPRENANT UNE BIELLE TÉLESCOPIQUE ÉQUIPÉE DE MOYENS DE RENVOI**
VERRIEGELUNGSVORRICHTUNG MIT EINER TELESKOPISCHEN VERBINDUNGSSTANGE MIT RÜCKSTELLMITTEL
LOCKING DEVICE COMPRISING A TELESCOPIC CONNECTING ROD EQUIPPED WITH RETURN MEANS

(30) Priorité: 20.08.2007 FR 0705938
(43) Date de publication de la demande: 28.04.2010
(73) Titulaire: Aircelle, 76700 Gonfreville l'Orcher (FR)
(72) Inventeur: PROVOST, Fabrice, F-76280 Criquetot-l'esneval (FR)
(74) Mandataire: Chevalier, Renaud Philippe
(86) Numéro de dépôt international: PCT/EP2008/060586
(87) Numéro de publication internationale: WO 2009/043635

(56) Documents cités:
- EP-A- 1 197 619
- DE-A1- 3 045 865
- DE-U1- 9 016 416
- FR-A- 1 485 188
- US-A- 4 549 708
- US-A- 5 984 382

## Description

La présente invention se rapporte à un dispositif de verrouillage conçu pour rattacher fixement un premier élément à un second élément, et plus particulièrement à une nacelle de turboréacteur équipée d'au moins un tel dispositif de verrouillage.

Pour verrouiller deux éléments l'un à l'autre, il est connu depuis fort longtemps d'installer un organe de verrouillage dans le premier élément, un organe de verrouillage complémentaire dans le deuxième élément, et de commander le rattachement ou le détachement de ceux-ci par l'intermédiaire d'une poignée de commande reliée à l'organe de verrouillage par l'intermédiaire de moyens de transmission, par exemple du type câbles ou barres rigides.

US-A-4 549 708, FR-A-1 485 188 et DE-U1-9 016 416 montrent de tels dispositifs de verrouillage.

Dans le cadre spécifique d'une nacelle de turboréacteur comprenant une section avant d'entrée d'air, une section médiane destinée à entourer une soufflante du turboréacteur, et une section arrière formée à partir d'au moins deux demi-coquilles, ces dernières sont de façon classique maintenues en position de fermeture au moyen de tels dispositifs de verrouillage disposés le long d'une ligne de jonction située en partie inférieure (à 6h).

Pour chacun d'eux, la poignée de commande est conçue de manière à pouvoir être déplacée alternativement d'une position d'ouverture où l'organe de verrouillage est ouvert, à une position de fermeture où l'organe de verrouillage est fermé, en passant par une phase intermédiaire où l'organe de verrouillage est fermé.

Néanmoins, un tel dispositif de verrouillage est rigide et n'est donc pas tolérant aux déplacements relatifs entre l'organe de verrouillage et la poignée de commande. La conséquence de ces déplacements peut être un déverrouillage intempestif, ou dans une moindre mesure une sollicitation mécanique trop importante des moyens de transmission conduisant à une usure prématurée du matériel.

De plus, il en découle une contrainte selon laquelle le réglage des moyens de transmission doit être réalisé très finement par les opérateurs pour permettre un fonctionnement optimal du dispositif de verrouillage.

L'invention a pour but de remédier, en tout ou partie, les inconvénients précédemment cités, et consiste pour, cela en un dispositif de verrouillage selon les caractéristiques de la revendication 1. Ainsi, le fait d'employer une bielle télescopique combinée à des moyens de renvoi permet d'être tolérant à l'égard des déplacements relatifs entre l'organe de verrouillage et la poignée de commande. En effet, le débattement autorisé par la bielle télescopique permet de compenser ces déplacements relatifs, et les moyens de renvoi assurent un maintien permanent de l'organe de verrouillage en position verrouillée sur l'organe de verrouillage complémentaire au cours de ces déplacements relatifs. Le verrouillage est donc effectif et sécurisé, et la bielle télescopique n'est que très peu sollicitée d'un point de vue mécanique.

De plus, les opérateurs ne sont plus tenus à procéder à un réglage extrêmement précis des moyens de transmission du fait du débattement autorisé par la bielle télescopique. Ceci constitue donc un important avantage par rapport aux dispositifs de verrouillage traditionnels qui interdisent toute approximation compte tenu de leur rigidité.

Par ailleurs, un tel dispositif de verrouillage permet un réglage à l'ouverture de la poignée de commande où seul l'effort du verrouillage entre en ligne de compte.

Préférentiellement encore, les moyens de renvoi sont constitués par au moins un ressort intégré dans la bielle télescopique.

Selon un mode de réalisation préféré de l'invention, le ressort présente une première extrémité fixée dans l'extrémité de la première tige emmanchée dans la deuxième tige, et une seconde extrémité fixée dans la deuxième tige.

Avantageusement encore, la poignée de commande est conçue de manière à pouvoir être déplacée alternativement d'une position douverture stable où l'organe de verrouillage est ouvert, à une position de verrouillage stable où l'organe de verrouillage est fermé, en passant par une phase intermédiaire instable où l'organe de verrouillage est fermé.

Selon une variante de réalisation préférée de l'invention, l'organe de renvoi est conçu de manière à pouvoir, durant la phase intermédiaire, renvoyer la poignée de commande en direction de sa position d'ouverture si ladite poignée de commande est libérée de toute contrainte extérieure.

Un autre avantage réside donc dans le fait que, si les contraintes s'exerçant sur la poignée de commande en vue de la fermer cessent avant que celle-ci n'atteigne sa position fermée et sécurisée, l'organe de contrainte tend à la renvoyer dans sa position douverture. Par conséquent, la détection visuelle de la mauvaise fermeture du dispositif de verrouillage est rendue plus aisée.

La présente invention se rapporte également à une nacelle de turboréacteur comprenant une section avant d'entrée d'air, une section médiane destinée à entourer une soufflante du turboréacteur, et une section arrière formée à partir dau moins deux demi-coquilles maintenues en position de fermeture au moyen d'ensembles de verrouillage disposés le long d'une ligne de jonction située en partie inférieure, caractérisée en ce qu'au moins l'un de ces ensembles de verrouillage comprend un dispositif de verrouillage selon l'invention.

Un avantage très important réside alors dans le fait que le renvoi de la poignée de commande vers sa position d'ouverture grâce à l'organe de renvoi dans le cas d'une cessation des contraintes de fermeture durant la phase intermédiaire permet de ce fait d'empêcher la fermeture et le verrouillage du fan cowl disposé autour.

Préférentiellement, le dispositif de verrouillage selon l'invention est disposé au moins en avant de la ligne de jonction.

Enfin, la présente invention se rapporte à un aéronef comprenant au moins une nacelle selon l'invention.

La mise en oeuvre de l'invention sera mieux comprise à l'aide de la description détaillée qui est exposée ci-dessous en regard du dessin annexé dans lequel :
La figure 1 est une vue schématique en coupe longitudinale dune nacelle selon l'invention à l'état de fermeture ;
La figure 2 est une vue en perspective de la section arrière de la nacelle représentée à la figure 1 ;
La figure 3 est une vue partielle agrandie du dispositif de verrouillage équipant la nacelle représentée à la figure 2 ;
La figure 4 est une vue de détail de la bielle télescopique du dispositif de verrouillage représenté à la figure 3 en position dextension minimale ;
Les figures 5 à 7 sont des vues schématiques du dispositif de verrouillage selon que la poignée de commande est respectivement en position d'ouverture, en position intermédiaire et en position de fermeture.

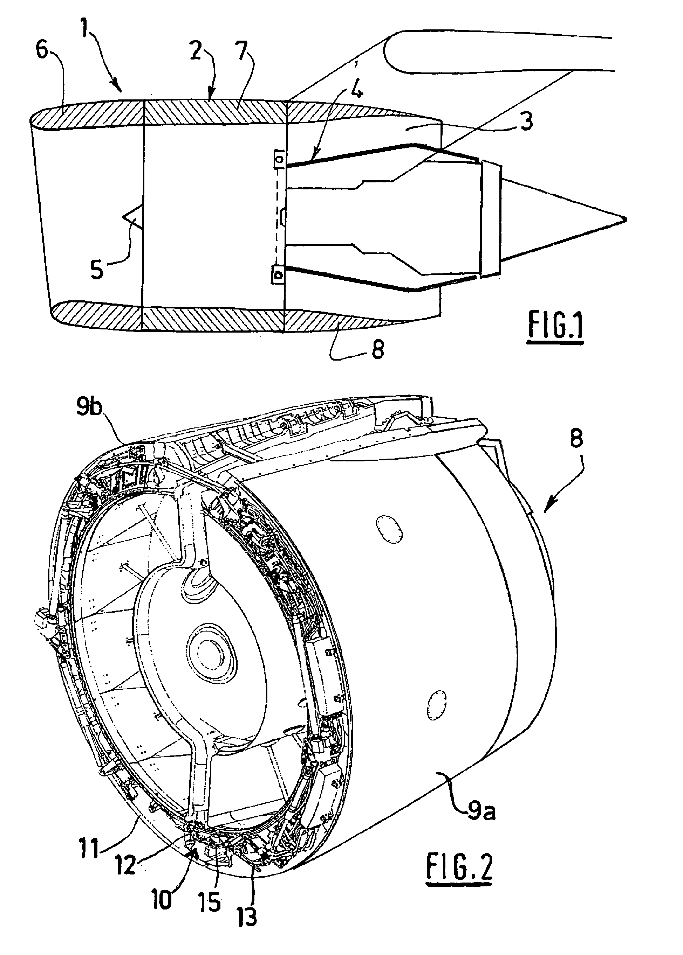

Une nacelle 1 d'un aéronef selon l'invention, telle que représentée à la figure 1, comprend de manière connue en soi une structure externe 2, dite OFS, qui définit un canal annulaire 3 d'écoulement avec une structure interne 4 concentrique entourant la structure du turboréacteur (non représenté) proprement dite en arrière d'une soufflante 5.

Plus précisément, cette structure externe 2 se décompose en une section avant 6 d'entrée d'air, une section médiane 7 destinée à entourer la soufflante 5, et une section arrière 8 formée à partir d'au moins deux demi-coquilles 9a, 9b.

En position de travail, les deux demi-coquilles 9a, 9b sont positionnées au plus près du turboréacteur, et sont maintenues de façon classique dans cette position à l'aide dune pluralité de dispositifs de verrouillage prévus le long d'une ligne de jonction située en partie inférieure (à 6h).

Comme représenté à la figure 2, un dispositif de verrouillage 10 selon l'invention peut notamment être intégré en partie avant de la section arrière 8, et plus spécialement au niveau dun cadre avant 11, ce dernier étant l'élément permettant de rattacher la section arrière 8 à une partie fixe de la section médiane 7.

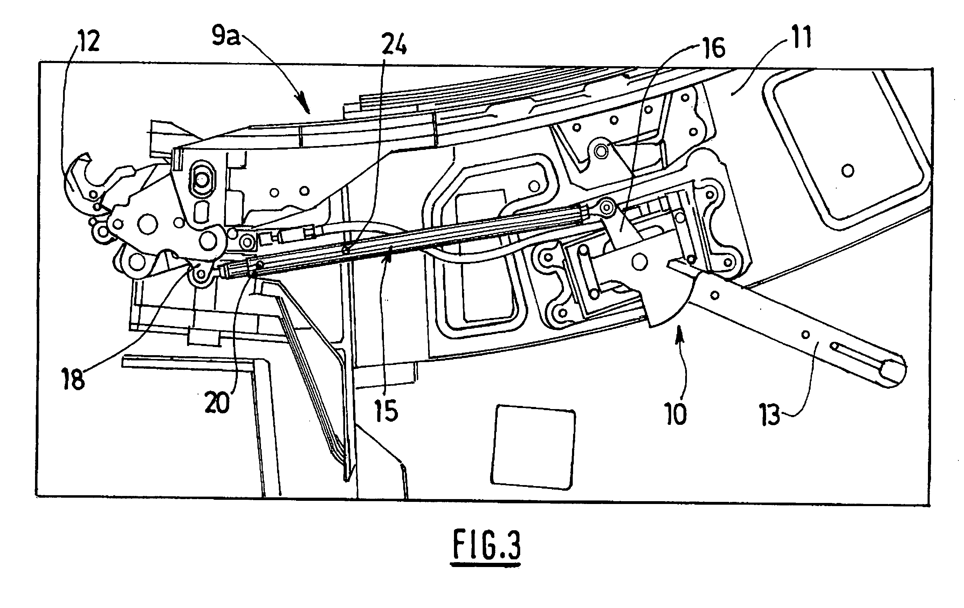

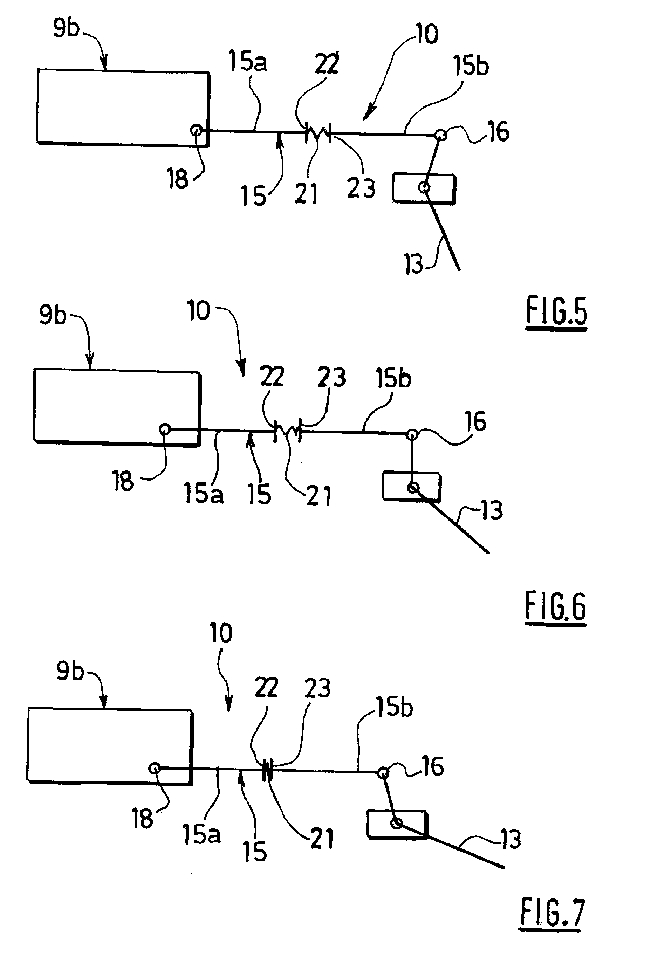

Le dispositif de verrouillage 10, tel que représenté aux figures 3 à 7, comprend schématiquement un organe de verrouillage 12 équipant l'une des deux demi-coquilles 9a, et un organe de verrouillage complémentaire (non représenté) équipant l'autre demi-coquille 9b.

De façon classique, ce dispositif de verrouillage 10 comprend une poignée de commande 13 déportée reliée à l'organe de verrouillage 12 par l'intermédiaire de moyens de transmission comprenant une bielle 15 présentant, d'une part, une première extrémité rattachée à une biellette 16 dont la mise en rotation est actionnée par le pivotement de la poignée de commande 13, et d'autre part, une seconde extrémité rattachée indirectement audit organe de verrouillage 12.

L'organe de verrouillage 12 est constitué par un crochet dont le pivotement est asservi de façon classique au mouvement de la poignée de commande 13 par l'intermédiaire d'un jeu de biellettes 18 reliant la seconde extrémité de la tige 15 audit crochet 12.

L'organe de verrouillage complémentaire sera réalisé sous la forme d'un axe longitudinal autour duquel le crochet 12 pourra venir se raccrocher ou au contraire s'écarter selon que la poignée de commande 13 sera actionnée en vue de la fermeture ou de l'ouverture du dispositif de verrouillage 10.

Selon l'invention, la bielle 15 est une bielle télescopique qui se décompose en une première tige 15a emmanchée dans une seconde tige 15b creuse.

La partie emmanchée de la première tige 15a présente une surface latérale équipée de deux fentes 19 longitudinales diamétralement opposées. Un axe 20 transversal fixé dans deux orifices diamétralement opposés de la deuxième tige 15b traverse les deux fentes 19 de la première tige 15a. Par conséquent, la longueur de ces deux fentes 19 définit l'amplitude maximale d'oscillation de la bielle 15 télescopique.

Des moyens de renvois réalisés sous la forme d'un ressort 21 sont intégrés dans la bielle 15 télescopique. Plus précisément, ce ressort 21 comporte une première extrémité 22 fixée dans l'extrémité de la première tige 15a emmanchée dans la deuxième tige 15b, et une seconde extrémité 23 rattachée à la deuxième tige 15b par l'intermédiaire d'un pion 24 transversal fixé dans deux alésages présentés par la surface latérale de ladite deuxième tige 15b.

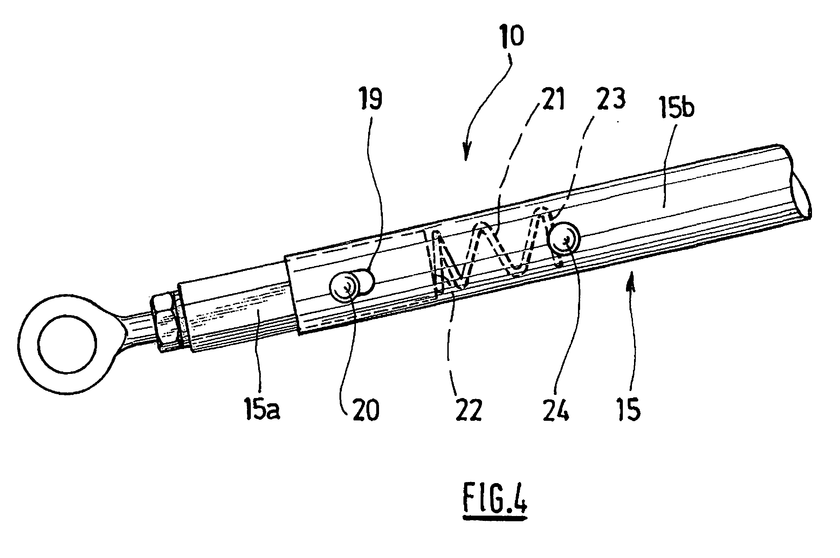

Au repos, ce ressort 21 le ressort est toujours en compression et tente décarter les tiges 15a, 15b l'une de l'autre, mais en l'absence de déformation du cadre avant 11, la bielle 15 est en position d'extension minimale, ce qui se traduit par le fait que l'axe 20 est au fond de la fente 19 comme montré sur la figure 4.

Selon l'invention, la poignée de commande 13 est conçue de manière à pouvoir être déplacée alternativement d'une position d'ouverture stable dans laquelle le crochet 12 est ouvert à une position de verrouillage stable où le crochet 12 est fermé, en passant par une phase intermédiaire instable où le crochet 12 est fermé.

Plus précisément, lorsque la poignée de commande 13 est en position d'ouverture stable, le ressort 21 est détendu et le crochet 12 est désolidarisé de l'organe de verrouillage complémentaire.

Le ressort 21 est conçu de façon à ce qu'il soit capable, si la poignée de commande est relâchée par l'opérateur avant que celui-ci ne l'ait placée en position de fermeture, de renvoyer en se détendant ladite poignée de commande 13 dans une position de quasi-ouverture où elle fait saillie, ce qui, d'une part, la rend clairement identifiable par l'opérateur, et d'autre part, lui permet d'interdire la fermeture du fan cowl disposé autour.

Dans la mesure où la poignée de commande 13 n'a pas atteint sa position de fermeture, ce renvoi interviendra même si la poignée de commande 13 a suffisamment pivoté pour forcer la première tige 15a et la seconde tige 15b à se translater jusqu'à ce que le crochet 12 vienne en prise avec l'organe de verrouillage complémentaire. Tout risque d'erreur est donc évité durant la phase intermédiaire.

Une fois que la poignée de commande 13 sera en position de fermeture stable, le ressort 21 se trouvera de ce fait dans un état de précontrainte. Ainsi, le fait demployer une bielle 15 télescopique combinée à un tel ressort 21 permet d'être tolérant à l'égard des déplacements relatifs entre le crochet 12 et la poignée de commande 13. En effet, le débattement autorisé par la bielle 15 télescopique permet de compenser ces déplacements relatifs, et le ressort assure un maintien permanent du crochet 12 en position verrouillée sur l'organe de verrouillage complémentaire au cours de ces déplacements relatifs. Le verrouillage est donc effectif et sécurisé, et la bielle 15 télescopique n'est que très peu sollicitée d'un point de vue mécanique.

De plus, l'opérateur n'est plus tenu à procéder à un réglage extrêmement précis des moyens de transmission du fait du débattement autorisé par la bielle 15 télescopique. Ceci constitue donc un important avantage par rapport aux dispositifs de verrouillage traditionnels qui interdisent toute approximation compte tenu de leur rigidité.

Par ailleurs, un tel dispositif de verrouillage 10 permet un réglage à l'ouverture de la poignée de commande 13 où seul l'effort du verrouillage entre en ligne de compte.

## Revendications

1. Dispositif de verrouillage (10) conçu pour rattacher fixement un premier élément (9a) à un second élément (9b), ledit dispositif de verrouillage comprenant un organe de verrouillage (12) destiné à équiper le premier élément, un organe de verrouillage complémentaire destiné à équiper le deuxième élément, et une poignée de commande (13) reliée à l'organe de verrouillage par l'intermédiaire de moyens de transmission, **caractérisé en ce que** les moyens de transmission comprennent, d'une part, une bielle (15) télescopique adaptée pour osciller librement entre une position d'extension minimale et une position d'extension maximale, et d'autre part, des moyens de renvoi (21) de la bielle télescopique vers sa position d'extension maximale, lesdits moyens de renvoi étant placés dans un état de précontrainte lorsque la poignée de commande est en position de fermeture, **en ce que** la bielle télescopique comprend une première tige (15a) emmanchée dans une deuxième tige (15b), et **en ce qu'**un axe (20) fixé transversalement dans la deuxième tige traverse deux fentes (19) ménagées dans la surface latérale de la première tige.

2. Dispositif de verrouillage (10) selon la revendication 1, **caractérisé en ce que** les moyens de renvoi sont constitués par au moins un ressort (21) intégré dans la bielle (15) télescopique.

3. Dispositif de verrouillage (10) selon la revendication 2, **caractérisé en ce que** le ressort (21) présente une première extrémité (22) fixée dans l'extrémité de la première tige (15a) emmanchée dans la deuxième tige (15b), et une seconde extrémité (23) fixée dans la deuxième tige.

4. Dispositif de verrouillage (10) selon l'une quelconque des revendications 1 à 3, **caractérisé en ce que** la poignée de commande (13) est conçue de manière à pouvoir être déplacée alternativement d'une position d'ouverture stable où l'organe de verrouillage (12) est ouvert, à une position de verrouillage stable où l'organe de verrouillage est fermé, en passant par une phase intermédiaire instable où l'organe de verrouillage est fermé.

5. Dispositif de verrouillage (10) selon la revendication 4, **caractérisé en ce que** l'organe de renvoi (21) est conçu de manière à pouvoir, durant la phase intermédiaire, renvoyer la poignée de commande (13) en direction de sa position d'ouverture si ladite poignée de commande est libérée de toute contrainte extérieure.

6. Nacelle (1) de turboréacteur comprenant une section avant (6) d'entrée d'air, une section médiane (7) destinée à entourer une soufflante (5) du turboréacteur, et une section arrière (8) formée à partir d'au moins deux demi-coquilles (9a, 9b) maintenues en position de fermeture au moyen d'ensembles de verrouillage disposés le long d'une ligne de jonction située en partie inférieure, **caractérisée en ce qu'**au moins l'un de ces ensembles de verrouillage comprend un dispositif de verrouillage (10) selon l'une quelconque des revendications 1 à 5.

7. Nacelle (1) de turboréacteur selon la revendication 6, **caractérisée en ce qu'**au moins le dispositif de verrouillage (10) est disposé en avant de la ligne de jonction.

8. Aéronef, **caractérisé en ce qu'**il comprend au moins une nacelle (1) selon l'une quelconque des revendications 6 ou 7.

## Claims

1. A locking device (10) designed for fixedly attaching a first element (9a) to a second element (9b), said locking device comprising a locking member (12) intended for equipping the first element, a complementary locking member intended for equipping the second element, and a control handle (13) connected to the locking member by transmission means, **characterized in that** the transmission means comprise, on the one hand, a telescopic connecting rod (15) designed to oscillate freely between a position of minimum extension and a position of maximum extension and, on the other hand, means (21) for the return of the telescopic connecting rod toward its position of maximum extension, said return means being placed in a prestressed state when the control handle is in the closing position, **in that** the telescopic connecting rod (15) comprises a first rod (15a) fitted into a second rod (15b), and **in that** a pin (20) fastened transversely in the second rod (15b) passes through two slots (19) formed in the lateral surface of the first rod (15a).

2. The locking device (10) as claimed in claim 1, **characterized in that** the return means consist of at least one spring (21) integrated in the telescopic connecting rod (15).

3. The locking device (10) as claimed in claim 2, **characterized in that** the spring (21) has a first end (22) fastened in the end of the first rod (15a) fitted in the second rod (15b), and a second end (23) fastened in the second rod.

4. The locking device (10) as claimed in any one of claims 1 to 3, **characterized in that** the control handle (13) is designed so as to be capable of being displaced alternately from a stable opening position, in which the locking member (12) is open, to a stable locking position, in which the locking member is closed, passing through an unstable intermediate phase where the locking member is closed.

5. The locking device (10) as claimed in claim 4, **characterized in that** the return member (21) is designed so as to be capable, during the intermediate phase, of returning the control handle (13) in the direction of its opening position if said control handle is freed of any external stress.

6. A turbojet engine nacelle (1) comprising a front air inlet section (6), a middle section (7) intended for surrounding a blower (5) of the turbojet engine, and a rear section (8) formed from at least two half-shells (9a, 9b) held in the closing position by means of locking assemblies arranged along a junction line located in the lower part, **characterized in that** at least one of these locking assemblies comprises a locking device (10) as claimed in any one of claims 1 to 5.

7. The turbojet engine nacelle (1) as claimed in claim 6, **characterized in that** at least the locking device (10) is arranged in front of the junction line.

8. An aircraft, **characterized in that** it comprises at least one nacelle (1) as claimed in either one of claims 6 or 7.

## Patentansprüche

1. Verriegelungsvorrichtung (10), ausgelegt zum festen Befestigen eines ersten Elements (9a) an einem zweiten Element (9b), wobei die Verriegelungsvorrichtung ein Verriegelungsorgan (12), das dazu gedacht ist, das erste Element auszustatten, ein passendes Verriegelungsorgan, das dazu gedacht ist, das zweite Element auszustatten, und einen Betätigungsgriff (13), der mit dem Verriegelungsorgan über Übertragungsmittel verbunden ist, umfasst, **dadurch gekennzeichnet, dass** die Übertragungsmittel einerseits eine teleskopische Schubstange (15), die dazu geeignet ist, um zwischen einer minimalen Erstreckungsposition und einer maximalen Erstreckungsposition frei hin und her zu schwingen, und andererseits Mittel (21) zum Umlenken der teleskopischen Schubstange in ihre maximale Erstreckungsposition umfassen, wobei die Umlenkmittel in einen Vorspannzustand gesetzt sind, wenn der Betätigungsgriff sich in der Verschlussposition befindet, dass die teleskopische Schubstange einen ersten Stab (15a) umfasst, der in einen zweiten Stab (15b) eingesteckt ist, und dass eine Achse (20), die quer in dem zweiten Stab festgelegt ist, durch zwei Spalten (19) hindurchgeht, die in der seitlichen Fläche des ersten Stabs eingerichtet sind.

2. Verriegelungsvorrichtung (10) nach Anspruch 1, **dadurch gekennzeichnet, dass** die Umlenkmittel aus mindestens einer Feder (21) bestehen, die in die teleskopische Schubstange (15) integriert ist.

3. Verriegelungsvorrichtung (10) nach Anspruch 2, **dadurch gekennzeichnet, dass** die Feder (21) ein erstes Ende (22), das an dem Ende des ersten Stabs (15a) festgelegt ist, der in den zweiten Stab (15b) eingesteckt ist, und ein zweites Ende (23), das in dem zweiten Stab festgelegt ist, aufweist.

4. Verriegelungsvorrichtung (10) nach einem der Ansprüche 1 bis 3, **dadurch gekennzeichnet, dass** der Betätigungsgriff (13) derart ausgelegt ist, dass er alternativ von einer stabilen Öffnungsposition, in der das Verriegelungsorgan (12) offen ist, in eine stabile Verriegelungsposition, in der das Verriegelungsorgan geschlossen ist, verschoben werden kann, indem es durch eine instabile Zwischenphase geht, in der das Verriegelungsorgan geschlossen ist.

5. Verriegelungsvorrichtung (10) nach Anspruch 4, **dadurch gekennzeichnet, dass** das Umlenkorgan (21) derart ausgelegt ist, dass es während der Zwischenphase den Betätigungsgriff (13) in Richtung auf seine Öffnungsposition zurückstellen kann, wenn der Betätigungsgriff von jeglicher äußeren Belastung frei ist.

6. Gondel (1) eines Turboluftstrahltriebwerks, umfassend einen vorderen Lufteintrittsabschnitt (6), einen mittleren Abschnitt (7), der dazu gedacht ist, ein Gebläse (5) des Turboluftstrahltriebwerks zu umgeben, und einen hinteren Abschnitt (8), der aus mindestens zwei Halbschalen (9a, 9b) gebildet ist, die in Verschlussposition gehalten werden durch Verriegelungseinheiten, die an einer Zusammenführungslinie entlang angeordnet sind, die sich in dem unteren Teil befindet, **dadurch gekennzeichnet, dass** mindestens eine dieser Verriegelungseinheiten eine Verriegelungsvorrichtung (10) nach einem der Ansprüche 1 bis 5 umfasst.

7. Gondel (1) eines Turboluftstrahltriebwerks nach Anspruch 6, **dadurch gekennzeichnet, dass** mindestens die Verriegelungsvorrichtung (10) vor der Zusammenführungslinie angeordnet ist.

8. Luftfahrzeug, **dadurch gekennzeichnet, dass** es mindestens eine Gondel (1) nach einem der Ansprüche 6 oder 7 umfasst.
